# EUROPEAN PATENT APPLICATION

(11) **EP 2 587 011 A1**
(43) Date of publication of application: **01.05.2013**
(21) Application number: 12189643.5
(22) Date of filing: 23.10.2012
(51) Int. Cl.: F01N 3/20

(54) **Ammonia injection systems**

(30) Priority: 26.10.2011 US 201113281719
(71) Applicant: General Electric Company, Schenectady, NY 12345 (US)
(72) Inventor: Zhang, Hua, Greenville, SC South Carolina 29615 (US); Kumar, Jitendra, Atlanta, GA Georgia 30339 (US); Kraemer, Gilbert Otto, Greenville, SC South Carolina 29615 (US)
(74) Representative: Cleary, Fidelma

(57) **Abstract**

A system including at least one primary manifold (91) adapted to receive an ammonia feed (74) and at least one distribution array (86) coupled to the primary manifold to receive the ammonia feed (74) from the at least one primary manifold (91) is provided. The at least one distribution array (86) includes a first supply tube (96) extending approximately perpendicular to the at least one (91) primary manifold and a first plurality of injection tubes (98) extending perpendicularly from the first supply tube (96). Each injection tube (98) of the first plurality of injection tubes includes a plurality of apertures (100) configured to expel the ammonia feed (74) from the distribution array along a length of the first supply tube (96).

## Description

### BACKGROUND OF THE INVENTION

The subject matter disclosed herein relates generally to power generation systems, and more particularly, to ammonia injection systems for use in power generation systems.

Combined cycle power generation systems, such as integrated gasification combined cycle (IGCC) power plants, are capable of generating energy from various forms of feedstock, such as oil or natural gas, relatively efficiently. Such power plants may utilize a heat recovery steam generator (HRSG) to recover the heat contained in an exhaust stream from a gas turbine to produce steam that may be utilized to drive a steam turbine. The HRSGs typically include a Selective Catalytic Reduction (SCR) system designed to reduce emissions. The SCR system generally includes an ammonia injection grid (AIG) capable of injecting ammonia into the exhaust stream upstream of a catalyst bed within the SCR system. As the exhaust stream flows through the catalyst bed, nitrogen oxides (NOₓ) in the exhaust gas can react with the ammonia in the presence of oxygen to produce nitrogen and water, thereby reducing emissions.

When typical AIGs inject ammonia into the exhaust stream, a non-uniform distribution of ammonia may be established throughout the volume of the exhaust stream. Unfortunately, this non-uniform distribution may result in excess unreacted ammonia downstream of the catalyst bed. In certain instances, this unreacted ammonia may react with other chemicals (e.g., sulfur) downstream of the catalyst bed to produce undesirable byproducts, such as ammonia sulfate.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first aspect, the invention resides in an ammonia injection grid including at least one primary manifold adapted to receive an ammonia feed and at least one distribution array coupled to the at least one primary manifold to receive the ammonia feed from the at least one primary manifold. The at least one distribution array includes a first supply tube extending approximately perpendicular to the at least one primary manifold and a first plurality of injection tubes extending perpendicularly from the first supply tube. Each injection tube of the first plurality of injection tubes includes a plurality of apertures configured to expel the ammonia feed from the at least one distribution array along a length of the first supply tube.

In a second aspect, the invention resides in a system including the above ammonia injection grid, wherein the grid includes a pair of primary manifolds disposed generally parallel to one another. The system also includes a plurality of distribution arrays extending from each of the primary manifolds. The plurality of apertures of the injection tubes of each array are adapted to expel the ammonia feed from the distribution array in a direction generally parallel to the plurality of supply tubes.

In a third aspect, the invention resides in a system including a heat recovery steam generator and an ammonia injection grid as described above, disposed within a housing of the heat recovery steam generator across a width of the housing

### BRIEF DESCRIPTION OF THE DRAWINGS

Embodiments of the present invention will now be described, by way of example only, with reference to the accompanying drawings in which:
FIG. 1 is a schematic flow diagram of an embodiment of a combined cycle power generation system including an ammonia injection system;
FIG. 2 is a schematic diagram of an embodiment of the heat recovery steam generator (HRSG) system of FIG. 1;
FIG. 3 is a schematic diagram depicting flow of exhaust gas through the AIG and the catalyst bed employed in the HRSG system of FIG. 2;
FIG. 4 is a schematic diagram illustrating flow of ammonia through an embodiment of a distribution array that can be employed in the AIG of FIG. 2;
FIG. 5 is a schematic diagram illustrating flow of ammonia through another embodiment of a distribution array that can be employed in the AIG of FIG. 2; and
FIG. 6 is a perspective view of an embodiment of an injection tube that may be employed in the distribution arrays of FIGS. 4 and 5.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

The disclosed embodiments are directed to ammonia injection systems designed to inject an ammonia feed into an exhaust gas stream in a direction that is approximately perpendicular to the flow direction of the exhaust gas stream. The ammonia injection systems include ammonia injection grids (AIGs) with one or more structural features that enable injection of ammonia into the exhaust gas stream within the SCR system. For example, the AIGs include distribution arrays designed to promote an even distribution of the ammonia feed into the exhaust gas stream upstream of the catalyst bed. The distribution arrays include supply pipes designed to extend generally transverse to the exhaust gas stream. Injection tubes extend perpendicularly from the supply tubes to direct the ammonia feed along the length of the supply tubes in a direction generally transverse to the flow of the exhaust gas. The foregoing features may provide distinct advantages over traditional AIGs. For example, due to the substantially even distribution of ammonia, these systems may employ less ammonia to achieve comparable emission levels, when compared to traditional AIGs without branches or extensions. Further, presently disclosed embodiments may offer increased plant efficiency because the uniform injection of ammonia across the exhaust gas stream may promote reaction of the ammonia within the catalyst bed. Accordingly, the quantity of unreacted ammonia exiting the catalyst bed may be reduced. Still further, presently disclosed embodiments may efficiently remove NOₓ from exhaust gas while maintaining relatively low ammonia slip, e.g., less than approximately 1 ppmvd ammonia, as compared to traditional systems in which the ammonia slip may be approximately 5 ppmvd ammonia.

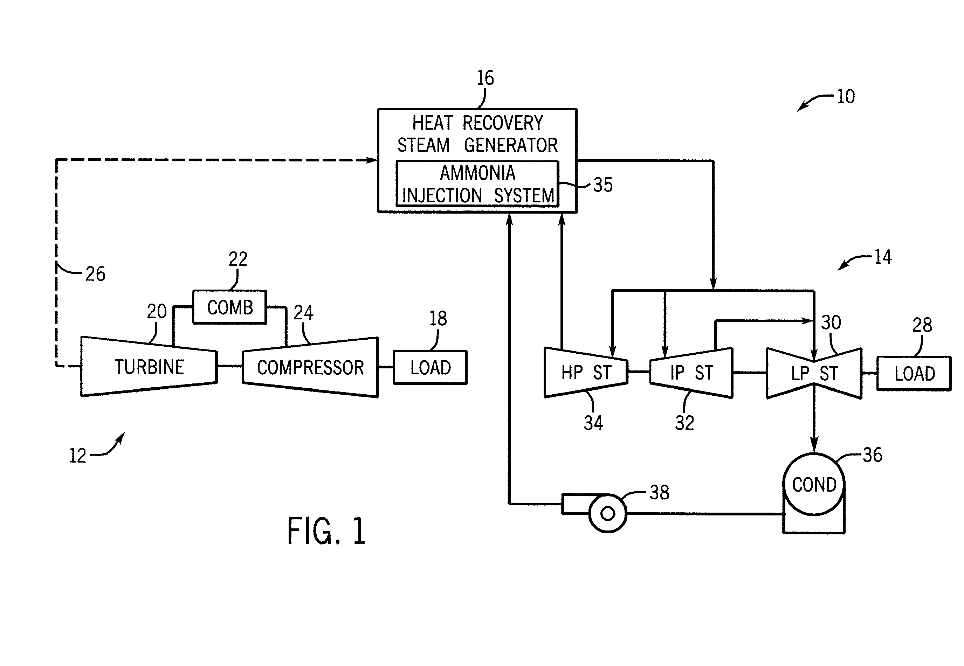

Turning now to the drawings, FIG. 1 is a schematic flow diagram of an embodiment of a combined cycle power generation system 10 that may employ ammonia injection systems that have distribution arrays designed to inject ammonia into a exhaust gas stream. The depicted system 10 includes a gas turbine 12, a steam turbine 14, and a heat recovery steam generation (HRSG) system 16. Within the gas turbine 14, gas, such as syngas, may be combusted to generate power within a "topping," or Brayton, cycle. Exhaust gas from the gas turbine 14 may be supplied to the HRSG system 16 to generate steam within a "bottoming," or Rankine, cycle. In certain embodiments, the gas turbine 12, the steam turbine 14, and the HRSG system 16 may be included within an integrated gasification combined cycle (IGCC) power plant.

The gas turbine 12 may generally combust a fuel (e.g., liquid and/or gas fuel) to drive a first load 18. The first load 18 may, for instance, be an electrical generator for producing electrical power. The gas turbine 12 may include a turbine 20, a combustor or combustion chamber 22, and a compressor 24. Exhaust gas 26 from the gas turbine 20 may be used to generate steam supplied to the steam turbine 14 (through the HRSG system 16) for driving a second load 28. The second load 28 also may be an electrical generator for generating electrical power. However, both the first and second loads 18 and 28 may be other types of loads capable of being driven by the gas turbine 12 and steam turbine 14. Further, although the gas turbine 12 and steam turbine 14 are depicted as driving separate loads 18 and 28, the gas turbine 12 and steam turbine 14 also may be utilized in tandem to drive a single load via a single shaft. In the depicted embodiment, the steam turbine 14 may include a low-pressure section 30 (LP ST), an intermediate-pressure section 32 (IP ST), and a high-pressure section 34 (HP ST). However, the specific configuration of the steam turbine 14, as well as the gas turbine 12, may be implementation-specific and may include any combination of sections.

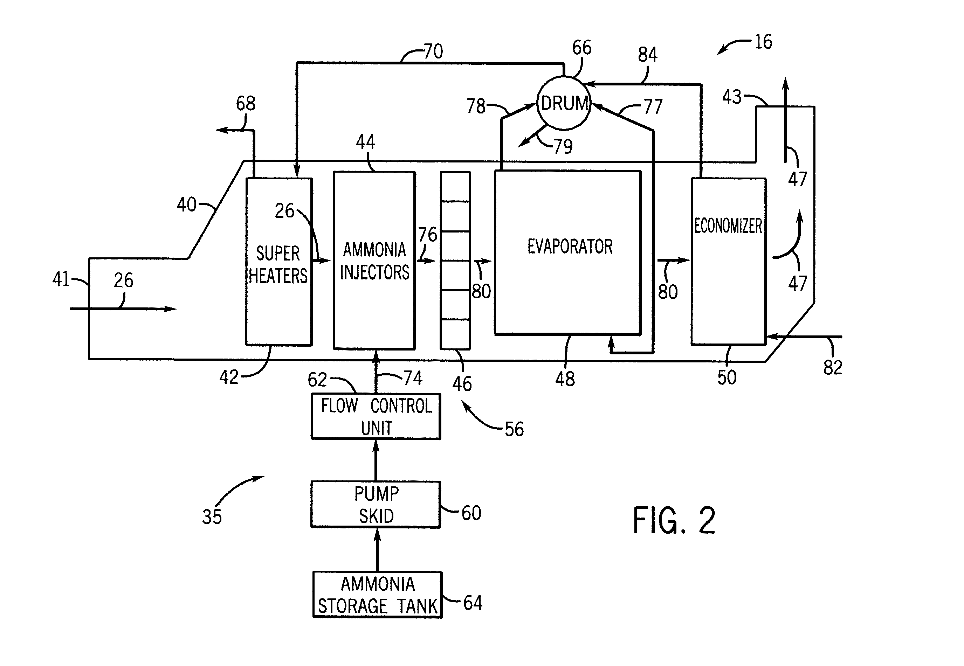

The system 10 also includes the HRSG system 16, which employs heat from the gas turbine 12 to generate steam for the steam turbine 14. The HRSG system 16 may include components such as evaporators, economizers, heaters, superheaters, and attemperators, among others, that are used to generate a high-pressure, high-temperature steam. The HRSG system 16 also includes an ammonia injection system 35 designed to inject ammonia into the exhaust gas 26 to facilitate the reduction of NOₓ within the exhaust gas 26. As discussed further below with respect to FIGS. 2-5, the ammonia injection system 35 injects ammonia into the exhaust gas 26 upstream of a catalyst bed where the NOₓ contained in the exhaust gas 26 is selectively reduced via reaction with ammonia in the presence of oxygen to produce nitrogen and water.

The steam produced by the HRSG system 16 may be supplied to the low-pressure section 30, the intermediate pressure section 32, and the high-pressure section 34 of the steam turbine 14 for power generation. Exhaust from the low-pressure section 30 may be directed into a condenser 36. Condensate from the condenser 36 may, in turn, be returned to the HRSG system 16 with the aid of a condensate pump 38. Within the HRSG system 16, the condensate may then be reheated to generate steam for the steam turbine 14.

FIG. 2 is a schematic diagram of an embodiment of the HRSG system 16 shown in FIG. 1. The HRSG system 16 includes a housing 40 having a width 45 and enclosing a superheater 42, an AIG 44, a catalyst bed 46, an evaporator 48, and an economizer 50. The housing 40 includes an inlet 41, which enables exhaust gas 26 to enter the housing 40, and an outlet 43, which enables a catalytically reduced gas 47 to exit the housing 40. The AIG 44 is part of the ammonia injection system 35 that is designed to inject ammonia into the exhaust gas 26 upstream of the catalyst bed 46. Further, the depicted ammonia injection system 35 also includes a pump skid 60, a flow control unit 62, and an ammonia storage tank 64. Together, the ammonia injection system 35 and the catalyst bed 46 may function as an SCR system 56 that selectively reduces the NOₓ contained in the exhaust gas 26.

During operation, the HRSG system 16 recovers heat from the exhaust gas 26 entering the housing 40 and produces steam, which is collected, for example, in a steam drum 66, for subsequent use driving the steam turbine 14. In particular, in the depicted embodiment, the exhaust gas 26 enters the housing 40 through inlet 41 and flows through the superheater 42. The superheater 42 utilizes heat contained in the exhaust gas 26 to heat saturated steam 70 from the steam drum 66, thereby reducing the water content of the saturated steam 70 and producing dry steam 68 having a reduced moisture content. After traveling through the superheater 42, the exhaust gas 26 is directed to the AIG 44.

In addition to the AIG 44, the ammonia injection system 35 includes the pump skid 60 and the flow control unit 64 that supply the ammonia feed 74 to the AIG 44. According to certain embodiments, the ammonia feed 74 may be a mixture of ammonia and air that is supplied to the AIG 44 by the pump skid 60 and the flow control unit 64. For example, the ammonia feed 74 provided to and expelled by the AIG 44 may be an anhydrous, gaseous mixture of ammonia and air. Further, in other embodiments, the ammonia feed 74 may include mixtures of ammonia and other components.

In the depicted embodiment, the ammonia storage tank 64 supplies aqueous ammonia to the pump skid 60 and the flow control unit 62. Within the flow control unit 62, the aqueous ammonia may be blended with hot air and vaporized to produce a gaseous mixture of ammonia and air that can be provided to the AIG 44. The flow control unit 62 also may regulate the flow and/or the concentration of the ammonia provided to the AIG 44. According to certain embodiments, the flow control unit may include equipment, such as flow meters, valves, vaporizers, and blowers, designed to prepare the ammonia fed to the AIG 44. However, in other embodiments, the components of the ammonia injection system 35 may vary depending on the type of ammonia supplied and the form of ammonia desired for the AIG 44. For example, in other embodiments, the ammonia injection system 35 may include equipment for converting urea to ammonia, for example, through thermal decomposition.

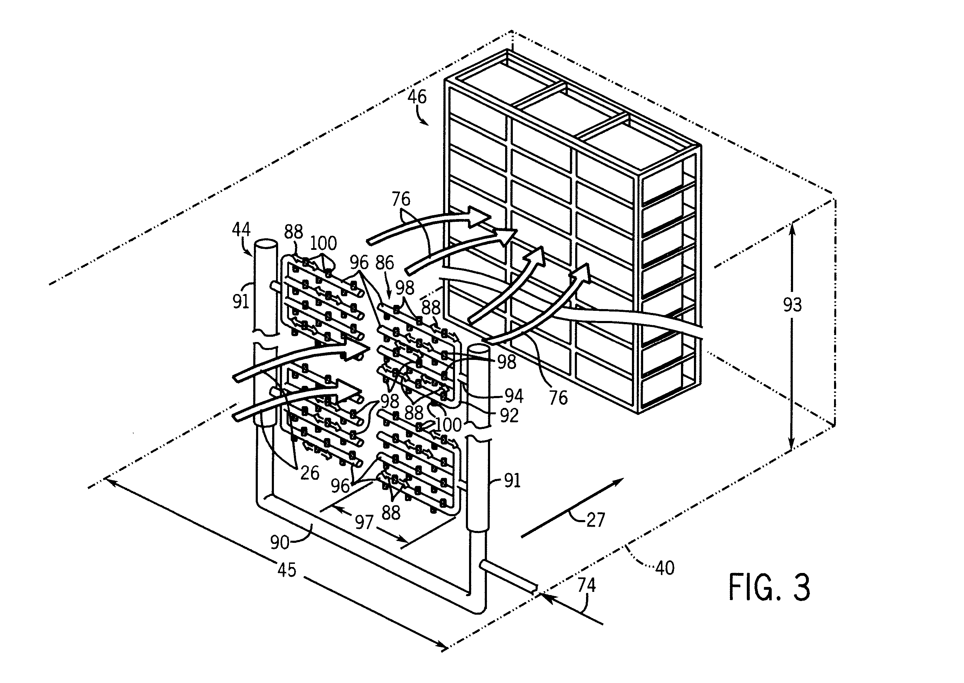

As the exhaust gas 26 flows through the AIG 44, the ammonia feed 74 is substantially uniformly injected throughout the exhaust gas 26 to produce a mixture 76 of the exhaust gas 26 and the ammonia feed 74. As discussed further below with respect to FIG. 3, the AIG 44 includes distribution arrays with injection tubes designed to promote a substantially even distribution of the ammonia feed 74 throughout the exhaust gas 26. The mixture 76 then flows through the catalyst bed 46, where the NOₓ in the exhaust gas reacts with the ammonia in the presence of oxygen to produce nitrogen and water. The catalytically reduced gas 80 that exits the catalyst bed 46 flows through the evaporator 48 to heat fluid flowing through the evaporator 48. More specifically, in the depicted embodiment, the evaporator 48 converts condensate 77 into steam 78 that is directed to the steam drum 66 for use in a downstream power production process, as indicated by arrow 79.

The gas 80 then flows through the economizer 50, where heat is removed from the gas 80 and transferred to condensate 82 from the steam turbine 14 (FIG. 1) to heat the condensate 82. In this manner, the condensate 82 is preheated to form a condensate 84 having a higher temperature than condensate 82 before being directed to the steam drum 66 for further use. Finally, cooled gas 47 exiting the economizer 50 flows through the outlet 43 to exit the HRSG system 16.

It should be noted that although the depicted HRSG 16 is a single pressure HRSG having a superheater 42 and an economizer 50, the disclosed ammonia injection systems 35 may be utilized in HRSG systems having other configurations as well. For example, the disclosed AIGs 44 may be utilized in triple pressure HRSG systems having multiple units that each include a superheater, and evaporator, an economizer, and a steam drum. For further example, embodiments of the AIGs may be utilized in vertically or horizontally oriented HRSGs in which the exhaust gas 26 flows perpendicular to the heat exchanger coils in either a horizontal or vertical direction, respectively.

FIG. 3 is a schematic flow diagram depicting the flow of the exhaust gas 26 and the mixture 76 of the exhaust gas 26 and the ammonia feed 74 through the AIG 44 and the catalyst bed 46, in more detail. In particular, in the illustrated embodiment, the AIG 44 includes a plurality of distribution arrays 86, each configured to inject ammonia feed 74 in a flow direction indicated by arrows 88. As shown, the overall flow direction 88 of the injected ammonia feed 74 is approximately perpendicular to the overall flow direction 27 of the exhaust gas 26 through the HRSG system 16 is directed along the width 45 of the HRSG housing 40. Further, the flow direction 88 of the injected ammonia feed 74 is approximately parallel to the width 45 of the housing 40. In this way, as the exhaust gas 26 flows through the distribution arrays 86, ammonia feed 74 is injected into the exhaust gas 26 to produce the gas mixture 76.

The AIG 44 includes structural features that enable the injection of the ammonia feed 74 into the exhaust gas 26 in a direction substantially perpendicular to the exhaust gas flow direction 27 and along the width 45 of the HRSG housing 40. In the depicted embodiment, a supply pipe 90 directs the ammonia feed 74 from the flow control unit 62 into two primary manifolds 91. The primary manifolds 91 extend generally parallel to one another along the height 93 of the HRSG housing 40, and direct the ammonia feed 74 into the distribution arrays 86. Each distribution array 86 includes a pipe 94 that connects a distribution manifold 92 of the distribution array 86 to one of the primary manifolds 91. Each distribution array 86 also includes a plurality of generally parallel supply tubes 96 that extend perpendicularly from the distribution manifold 92. Accordingly, each supply tube 96 having a length 97 extends along the width 45 of the HRSG system 16. Further, each supply tube 96 extends perpendicular to the primary manifolds 91 and perpendicular to the direction of flow 27 of the exhaust gas 26 through the HRSG system 16.

Injection tubes 98 extend perpendicularly from each of the supply tubes 96. As shown in FIG. 3, the injection tubes 98 extend from opposite sides of the supply tubes 96, and extend generally parallel to the primary manifolds 91 along the height 93 of the HRSG system 16. In some embodiments, the injection tubes 98 may not be parallel to the manifolds 91, but instead may be at an angle with respect to the manifolds 91. Further, in certain embodiments, the injection tubes 98 may only extend upward or downward from the supply tubes 96. Further, in some embodiments, the injection tubes 98 may be staggered, as shown in FIG. 3, or non-staggered, depending on the given application. Each injection tube 98 includes one or more apertures 100 that expel the ammonia feed 74.

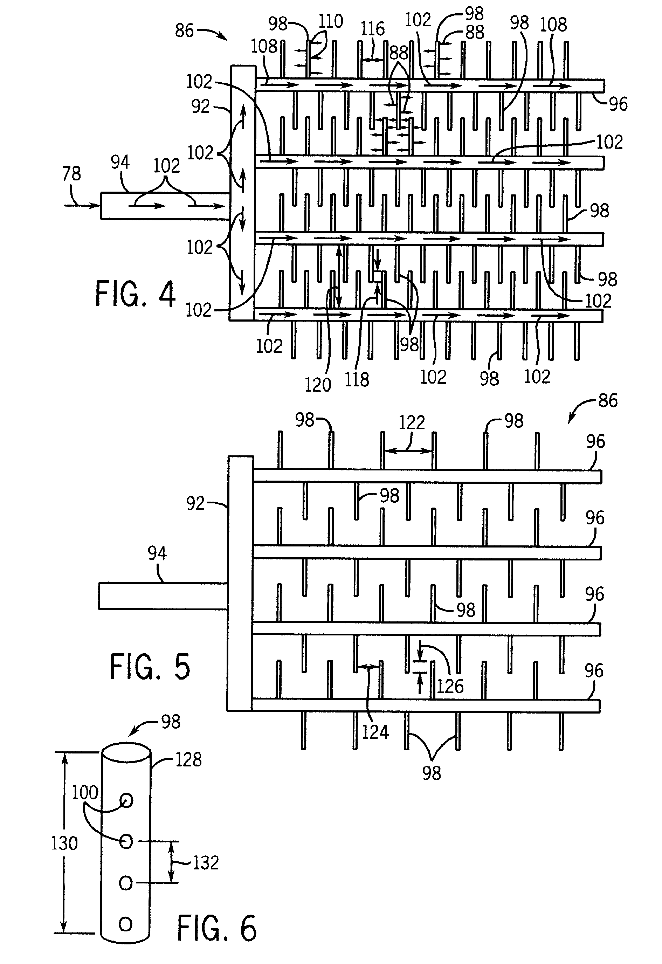

Regardless of the orientation of the injection tubes 98 with respect to the supply tubes 96, apertures 100 are designed to direct the ammonia feed 74 along the width 45 of the HRSG housing 40, generally perpendicular to the flow direction 27 of the exhaust gas 26 through the HRSG housing 40, and along the length 97 of the supply tubes 96. The foregoing structural arrangement may enable the ammonia feed to be uniformly injected into the exhaust gas 26 such that the concentration of ammonia in the gaseous mixture 76 is approximately equal throughout the volume of the mixture 76, as discussed in more detail below with respect to FIGS. 4 and 5.

As depicted in FIG. 3, during operation, the exhaust gas 26 flows past the distribution arrays 86 of the AIG 44, and mixes with the ammonia feed 74 that exits the injection tubes 98 in the flow direction 88. That is, the flow direction 27 of the exhaust gas 26 is perpendicular to the flow direction 88 of the ammonia feed 74, and the width 45 of the housing 40 of the HRSG 16 is transverse to the flow direction 27. The cross-current flow of the ammonia feed 74 with respect to the flow of the exhaust gas 26 promotes mixing and a substantially even distribution of the ammonia feed 74 in the exhaust gas 26 to produce the gaseous mixture 76 of the exhaust gas 26 and the ammonia feed 74. The mixture 76 flows toward the catalyst bed where the NOₓ in the exhaust gas reacts with the NH₃ in the ammonia feed in the presence of oxygen and the catalyst to produce nitrogen and water.

FIG. 4 is a schematic diagram illustrating the flow of ammonia feed 74 through a distribution array 86 of the AIG 44. The ammonia feed 74 enters the manifold 92 through the pipe 94 and follows the flow path 102, which is defined by the arrows. The composition of the ammonia feed 74 remains substantially constant throughout the indicated flow path 102. In particular, the ammonia feed flows through pipe 94 to the distribution manifold 92. After entering the distribution manifold 92, the flow is directed to the supply tubes 96. The ammonia feed 74 flows along the length of the supply tubes 96 and into injection tube 98. The injection tube 98 direct the ammonia feed 74 into the exhaust gas 26 in a direction generally parallel to the supply tubes 96, as indicated by arrows 88.

Structural features of the distribution arrays 86 may enable the injection of the ammonia feed 74 in a substantially uniform manner throughout the volume of the exhaust gas 26. For example, in one embodiment, a distance 116 between adjacent branched injection tubes 98 disposed along the length of a given supply tube 96 may be reduced or minimized such that the flow 88 of ammonia feed 74 emerging from each of the branched injection tubes penetrates approximately half of the distance 116. Further, in another embodiment, an overlap distance 118 between branched injection tubes 98 extending from adjacent supply tubes 96 may be optimized alone or in combination with distance 116 to ensure that a distance 120 between adjacent supply tubes 96 is penetrated by ammonia feed in a substantially uniform manner.

Still further, the branched injection tubes may be positioned to extend from the supply tubes 96 and arranged in such a way that the ammonia feed 74 is approximately evenly distributed throughout the exhaust gas 26 as the exhaust gas 26 flows through the ammonia injection system 35. The foregoing feature may offer advantages over traditional systems that are prone to uneven ammonia distribution throughout the exhaust gas. For example, such a feature may reduce or eliminate the presence of excess, un-reacted ammonia downstream of the catalyst bed, thus reducing or eliminating the likelihood of the formation of undesirable solids, such as ammonia sulfate, in downstream plant components.

FIG. 5 illustrates another embodiment of a distribution array 86 that can be employed in an AIG 44. The distribution array 86 shown in FIG. 5 is generally similar to the distribution array 86 shown in FIG. 4. However, the relative positions of the injection tubes 98 have been varied. As depicted, a distance 122 between adjacent injection tubes 98 disposed on the same supply tube 96 in the embodiment of FIG. 5 may be greater than the distance 116 between adjacent injection tubes 98 in the embodiment of FIG. 4. That is, the spacing between adjacent injection tubes 98 disposed on the same supply tube 96 may be subject to considerable implementation-specific variations in certain embodiments. Similarly, a distance 124 between adjacent branched injection tubes 98 on adjacent supply tubes 96 also may be variable in different embodiments. Still further, an overlap distance 126 between adjacent branch injection tubes 98 extending from adjacent supply tubes 96 may vary depending on the given application. For example, the overlap distance 126 is greater than the overlap distance 118 in the embodiments shown in FIGS. 5 and 4, respectively. It should be noted that the distances 122, 124, and 126 may also be varied based on operational parameters of the system, such as jet penetration, the distance between the ammonia injection gird and the downstream catalyst bed, and so forth. Further, the quantity of provided branched injection tubes 98 may vary in certain embodiments, depending on factors such as the desired back pressure for the given system.

FIG. 6 is a perspective view of an embodiment of an injection tube 98. The depicted branched injection tube 98 is cylindrically shaped and is defined by an annular wall 128. Apertures 100 are disposed lengthwise along a length 130 of the annular wall 128. In the depicted embodiment, adjacent apertures 100 are spaced a uniform distance 132 apart from one another. However, in other embodiments, the distance 132 between adjacent apertures may vary depending, for example, on the position of the aperture along the length 130 of the annular wall 128. For example, in some embodiments, the spacing between apertures disposed on a first portion of the length 130 may be different than the spacing between apertures disposed on a second portion of the length 130 of the annular wall 128. This may be advantageous in instances in which one portion of the length 130 overlaps with a portion of a branched injection tube extending from an adjacent supply tube.

It should be noted that embodiments of the disclosed ammonia injection systems are compatible for use in combined cycle power plant components, such as the HRSG system 16, as depicted in the described embodiment, as well as for use in simple cycle applications. Further, the depicted components of the ammonia injection system 35 are merely examples, and, accordingly, during implementation, the components included in the ammonia injection system are subject to considerable variations. For example, in certain embodiments, a blower and an ammonia/air mixture may be employed to produce the ammonia feed 74.

Further, it should be noted that the branched injection tubes 98 provided herein may be utilized to retrofit existing AIGs of current ammonia injection systems. For example, in one embodiment, existing distribution manifolds 92 may be modified to include the branched injection tubes 98. However, in other embodiments, the tubes of current systems may be replaced in their entirety by the distribution arrays 86 provided herein. Still further, in some embodiments, the supply tubes of existing AIGs may be replaced by the distribution arrays described herein. Further, existing HRSG systems or simple cycle systems may be updated with the AIGs provided herein.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A system, comprising:
   a heat recovery steam generator (16);
   an ammonia injection grid (44) disposed within a housing (48) of the heat recovery steam generator (16) across a width of the housing (40), the ammonia injection grid (44) as recited in any of claims 1 to 8. comprises:
      a primary manifold configured to receive an ammonia feed;
      a distribution array coupled to the primary manifold to receive the ammonia feed from the primary manifold, wherein the distribution array comprises:
         a first supply tube extending across the width of the housing; and
         a first plurality of injection tubes extending perpendicularly from the first supply tube, wherein each injection tube of the first plurality of injection tubes comprises a plurality of apertures configured to expel the ammonia feed from the distribution array along the width of the housing.
2. The system of clause 1, wherein the housing is configured to direct a flow of exhaust gas through the housing in a direction generally transverse to the width.
3. The system of clause 2, wherein the direction is approximately perpendicular to a flow direction of the ammonia feed exiting the plurality of apertures.
4. The system of clause 1 or 2, comprising a catalyst bed disposed within the housing downstream of the ammonia injection grid.
5. The system of any of clauses 1 to 3, comprising a gas turbine configured to produce exhaust gas for subsequent direction through the heat recovery steam generator.
6. The system of clauses 1 to 4, comprising a steam turbine configured to employ steam produced by the heat recovery steam generator.

## Claims

1. An ammonia injection grid (44), comprising:
at least one primary manifold (91) configured to receive an ammonia feed (74);
at least one distribution array (86) coupled to the at least one primary manifold (91) to receive the ammonia feed (74) from the at least one primary manifold (91), wherein the distribution array (86) comprises:
a first supply tube (96) extending approximately perpendicular to the at least one primary manifold (91); and
a first plurality of injection tubes (98) extending perpendicularly from the first supply tube (96), wherein each injection tube (98) of the first plurality of injection tubes comprises a plurality of apertures (100) configured to expel the ammonia feed from the at least one distribution array (86) along a length of the first supply tube (96).

2. The ammonia injection grid of claim 1, wherein the first plurality of injection tubes (98) are staggered with respect to one another along the length of the first supply tube (96).

3. The ammonia injection grid of claim 1 or 2, wherein the first plurality of injection tubes (98) extend from opposite sides of the first supply tube (96).

4. The ammonia injection grid of any of claims 1 to 3, wherein the ammonia feed (74) comprises a mixture of ammonia and air.

5. The ammonia injection grid of any of claims 1 to 4, wherein the plurality of apertures (100) are disposed on opposite sides of the first plurality of injection tubes (98).

6. The ammonia injection grid of any preceding claim, wherein the first plurality of injection tubes (98) extends parallel to the at least one primary manifold (91).

7. The ammonia injection grid of any preceding claim, comprising:
a second supply tube (96) extending approximately parallel to the first supply tube (96); and
a second plurality of injection tubes (98) extending perpendicularly from the second supply tube (96), wherein the first plurality of injections tubes (98) and the second plurality of injection tubes (98) cooperate to penetrate a distance between the first supply tube (96) and the second supply tube (96) with the ammonia feed.

8. The ammonia injection grid of claim 7, wherein injection tubes (98) of the second plurality of injection tubes are staggered between injection tubes (98) of the first plurality of injection tubes.

9. A system, comprising:
the ammonia injection grid of any of claims 1 to 8, the injection grid (44) including a pair of primary manifolds (91) disposed generally parallel to one another; and a plurality of distribution arrays (86) extending from each of the primary manifolds (91), each injection tube (98) of the plurality of injection tubes comprises a plurality of apertures (100) configured to expel the ammonia feed from the distribution array (86) in a direction generally parallel to the plurality of supply tubes (96).

10. The system of claim 9, wherein each of the plurality of distribution arrays (86) comprises a distribution manifold (92) extending approximately perpendicular to the plurality of supply tubes (96) to direct the ammonia feed (74) into the plurality of supply tubes (96).

11. The system of claim 10, wherein the distribution manifold (92) extends parallel to the pair of primary manifolds (91).

12. The system of claim 10, wherein each of the plurality of distribution arrays (86) comprises a connector pipe (94) configured to connect the distribution manifold (92) to one of the pair of primary manifolds (91), wherein the connector pipe (94) extends generally parallel to the plurality of supply tubes (96).

13. The system of any of claims 9 to 12, comprising a flow control unit (62) configured to control the flow of the ammonia feed (74) to the pair of primary manifolds (91).

14. The system of claim 13, comprising a pump skid (60) configured to facilitate the transfer of the ammonia feed (74) from an ammonia storage tank (64) to the flow control unit (62).

15. A system, comprising:
a heat recovery steam generator (16);
an ammonia injection grid (44) disposed within a housing (48) of the heat recovery steam generator (16) across a width of the housing (40), the ammonia injection grid (44) as recited in any of claims 1 to 8.
